# EUROPEAN PATENT APPLICATION

(11) **EP 4 799 459 A1**
(43) Date of publication of application: **02.09.2026**
(21) Application number: 25222087.6
(22) Date of filing: 10.12.2025
(51) Int. Cl.: A01D 34/00, B60L 1/00, B60L 53/14, B60L 53/36

(54) **ENHANCED CHARGE STATION DOCKING ARRANGEMENT AND METHOD FOR A ROBOTIC LAWN MOWER**

(30) Priority: 27.02.2025 SE 2550187
(71) Applicant: Husqvarna AB, 561 82 Huskvarna (SE)
(72) Inventor: Allard, Martin, 561 82 Huskvarna (SE)

(57) **Abstract**

The present disclosure relates to a robotic lawn mower interaction station (200, 200') adapted to receive an oncoming robotic lawn mower (100, 100'). The interaction station (200, 200') comprises a charging tower (201) with a charging transmission arrangement (210) that is adapted to provide a charge current, delivered from a station charging unit (202), to a charging reception arrangement (156) of a docked robotic lawn mower (100, 100'). The interaction station (200, 200') comprises a reception ground plate (203, 203') that extends from the charging tower (201) towards a frontmost part (204), comprised in an entering edge (205). The ground plate (203, 203') is constituted by a plate part (206, 206') and one ridge part (207, 207') that extends a certain ridge height (h) from the plate part (206, 206').

## Description

### TECHNICAL FIELD

The present disclosure relates to a computer-implemented method performed by a robotic lawn mower control unit. The method comprises controlling a front-wheel driven robotic lawnmower to move in a forward direction and approach a robotic lawn mower interaction station having a charging transmission arrangement.

### BACKGROUND

Robotic lawn mowers are becoming increasingly more popular. A robotic lawn mower is usually battery-powered by means of a rechargeable battery and is adapted to cut grass on a user's lawn automatically. A robotic lawn mower can be charged automatically without intervention of the user, and does normally not need to be manually managed after being set once. When the need for charging arises, the robotic lawn mower automatically travels to a charging station, docks with the charging station such that a lawn mower charging interface makes electrical connection with a charging connector at the charging station.

In a typical deployment a work area, such as a garden, park, sports field, golf court and the like, the work area is enclosed by a boundary that can be in the form of a boundary wire with the purpose of keeping the robotic lawn mower inside the work area. An electric control signal may be transmitted through the boundary wire thereby generating an (electro-) magnetic field emanating from the boundary wire.

Alternatively, or as a supplement, the robotic lawn mower can be equipped with a navigation system that is adapted for satellite navigation by means of GPS (Global Positioning System) or some other Global Navigation Satellite System (GNSS) system, for example using Real Time Kinematic (RTK). A boundary is in this case not defined by a physical wire, but by a virtual boundary.

Traditionally a robotic lawn mower uses the boundary wire and/or other navigation systems for roughly locating the charging station. So-called F-and N-fields, magnetic fields emanating from wires comprised in the charging station, are used to communicate with the mower for the last sequence of the docking procedure for a precise docking such that electrical connection can be made between the lawn mower charging interface and the charging connector at the charging station.

When using vision technology, the robotic lawn mower uses a vision system comprising a camera for roughly locating the charging station. For the last sequence of the docking when the robotic lawn mower is close to the charging station, the camera could be used, instead of the F- and N-field, for the precise docking. However, having the camera in the front and the charging interface at the back of the robotic lawn mower creates a problem. The robotic lawn mower has to rotate about 180 degrees and reverse into the charging station without knowing exactly where it is positioned relative to the charging connector, which may create an unprecise docking procedure. This makes it difficult to ensure that electrical connection can be made with the charging connector at the charging station.

It is therefore desired to provide means and methods for enabling a precise docking between a robotic lawn mower and a charging station, ensuring that electrical connection is made between a lawn mower charging interface and a charging connector at the charging station. This is for example desired when the robotic lawn mower uses vision technology with a camera and has the camera in the front and its charging interface at the back.

### SUMMARY

The object of the present disclosure is to provide means and methods for enabling a precise docking between a robotic lawn mower and a charging station, ensuring that electrical connection is made between a lawn mower charging interface and a charging connector at the charging station.

This object is achieved by means of a computer-implemented method performed by a robotic lawn mower control unit. The method comprises controlling a front-wheel driven robotic lawnmower to move in a forward direction and approach a robotic lawn mower interaction station having a charging transmission arrangement, to stop at a distance from the charging transmission arrangement. The method further comprises controlling the robotic lawnmower to turn in a rotational movement such that at least one rear wheel enter a reception ground plate of the interaction station, to continue turning such that at least one rear wheel passes a ridge formed in the reception ground plate, detect that at least one rear wheel has passed the ridge formed in the reception ground plate, and then to stop the turning. The method further comprising controlling the robotic lawnmower to reverse towards the charging transmission arrangement, and to dock the robotic lawn mower such that electrical contact is established between the charging transmission arrangement and a charging reception arrangement of the docked robotic lawn mower.

In this manner, a desired position of the four-wheeled robotic lawn mower relative to the interaction station can be detected, where the desired position enables docking and charging, preferably without any further positioning being needed.

According to some aspects, the method further comprises using a detector device to detect that that at least one rear wheel has passed a ridge formed in a reception ground plate of a robotic lawn mower interaction station. The detector device is used for measuring at least one of an acceleration velocity, angular velocity, and orientation.

This provides a reliable detection of that a rear wheel has passed the ridge part. Ordinary inexpensive sensors, already being present at the robotic lawnmower, can be used, neither adding cost, nor complexity.

This object is also achieved by means of a robotic lawn mower interaction station adapted to receive an oncoming robotic lawn mower, where the interaction station comprises a charging tower with a charging transmission arrangement that is adapted to provide a charge current, delivered from a station charging unit, to a charging reception arrangement of a docked robotic lawn mower. The interaction station comprises a reception ground plate that extends from the charging tower towards a frontmost part, comprised in an entering edge. The ground plate is constituted by a plate part and one ridge part that extends a certain ridge height from the plate part.

In this manner, the interaction station comprises a ridge part that can be used for detecting the position of a robotic lawn mower relative to the interaction station when a wheel of the robotic lawn mower passes over the ridge part.

According to some aspects, the reception ground plate extends along a longitudinal extension from the charging tower towards the frontmost part, where the ridge part at least partly runs along the longitudinal extension.

This means that the ridge has an extension that at least partly, or mainly, runs along the longitudinal extension, which alleviates the procedure of a wheel of the robotic lawn mower passing over the ridge part.

According to some aspects, the entering edge is adapted to receive an oncoming and docking robotic lawn mower, and the longitudinal extension extends along a travelling direction of a robotic lawn mower when being received at the interaction station.

According to some aspects, the ridge part has a ridge width mainly across the longitudinal extension, where the ridge height increases towards, and decreases from, a maximum ridge height along the ridge width. This alleviates the procedure of a wheel of the robotic lawn mower passing over the ridge part, the shape of the ridge part providing a smooth passage.

According to some aspects, the reception ground plate has a center line that extends straight from a charging tower base center, along the longitudinal extension, towards the frontmost part, where the ridge part extends along the center line.

Such a centered ridge part is suitable for detecting a desired position of a four-wheeled robotic lawn mower relative to the interaction station when one swivelable wheel out of two swivelable rear wheels of the robotic lawn mower passes over the ridge part.

According to some aspects, the reception ground plate has a center line that extends straight from a charging tower base center along the longitudinal extension, towards the frontmost part, where the ridge part extends offset from the center line.

Such an off-set ridge part is suitable for detecting a desired position of a three-wheeled robotic lawn mower relative to the interaction station when the only swivelable rear wheel of the robotic lawn mower passes over the ridge part.

This object is also achieved by means of control units, robotic lawn mowers, robotic lawn mower systems and computer program products that are associated with above advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present disclosure will become apparent when studying the appended claims and the following description. The skilled person realizes that different features of the present disclosure may be combined to create embodiments other than those described in the following, without departing from the scope of the present disclosure.

### BRIEF DESCRIPTION OF THE DRAWINGS

The present disclosure will now be described more in detail with reference to the appended drawings, where:
- Figure 1: shows a perspective front view of a robotic lawn mower;
- Figure 2: shows a perspective back view of the robotic lawn mower;
- Figure 3: shows a schematic overview of the robotic lawn mower;
- Figure 4: shows a schematic side view of the robotic lawn mower approaching a robotic lawn mower interaction station;
- Figure 5: shows a schematic front view of the robotic lawn mower interaction station;
- Figure 6: shows a schematic perspective view of the robotic lawn mower interaction station according to a first example;
- Figure 7: shows a schematic perspective view of the first example of the robotic lawn mower and the robotic lawn mower interaction station in a first position;
- Figure 8: shows a schematic perspective view of the first example of the robotic lawn mower and the robotic lawn mower interaction station in a second position;
- Figure 9: shows a schematic perspective view of the first example of the robotic lawn mower and the robotic lawn mower interaction station in a third position;
- Figure 10: shows a schematic back view of the first example of the robotic lawn mower and the robotic lawn mower interaction station in the third position;
- Figure 11: shows a schematic back view of the first example of the robotic lawn mower and the robotic lawn mower interaction station in a fourth position;
- Figure 12: shows a schematic perspective view of the first example of the robotic lawn mower and the robotic lawn mower interaction station in the fourth position;
- Figure 13: shows a schematic back view of the first example of the robotic lawn mower and the robotic lawn mower interaction station in a fifth position;
- Figure 14: shows a schematic perspective view of the robotic lawn mower interaction station according to a second example;
- Figure 15: shows a schematic back view of the second example of the robotic lawn mower and the robotic lawn mower interaction station in the third position;
- Figure 16: shows a schematic back view of the second example of the robotic lawn mower and the robotic lawn mower interaction station in the fourth position;
- Figure 17: shows a schematic back view of the second example of the robotic lawn mower and the robotic lawn mower interaction station in the fifth position;
- Figure 18: shows a computer program product; and
- Figure 19: shows a flowchart for methods according to the present disclosure.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the present disclosure. As used herein, the singular forms "a", "an" and "the" are intended to include the plural forms as well, unless the context clearly indicates otherwise.

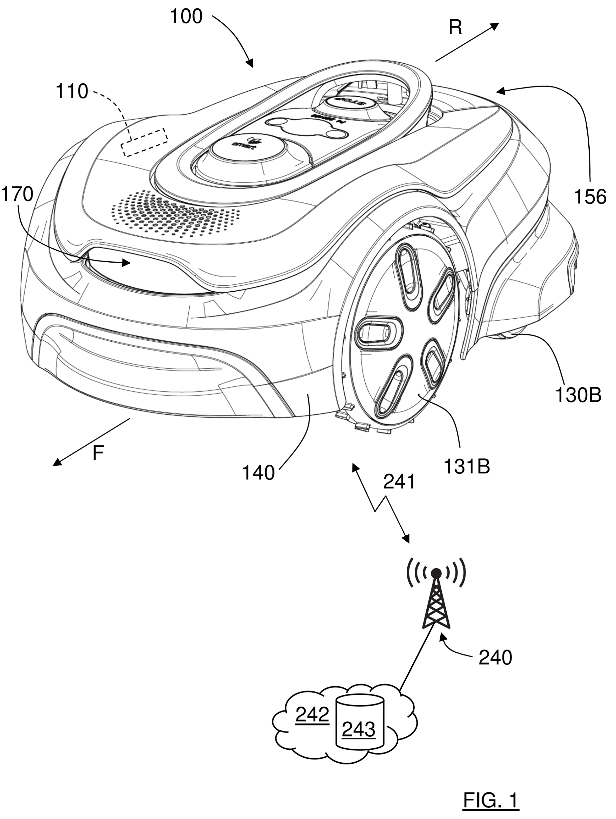

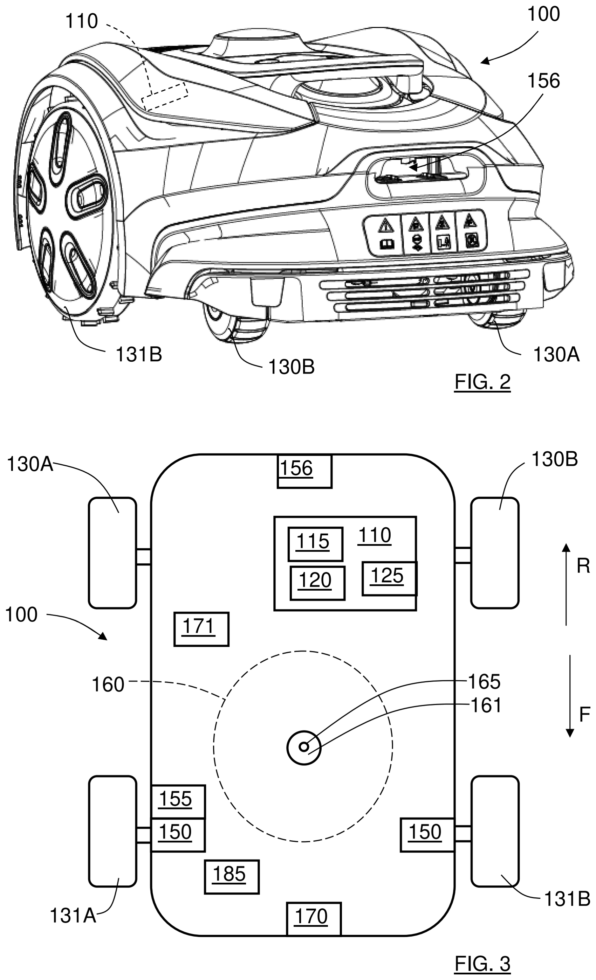

In the following, it is referred to Figure 1, Figure 2 and Figure 3. Figure 1 shows a perspective front side view of a robotic lawn mower 100, Figure 2 shows a perspective back side view of a robotic lawn mower 100, and Figure 3 shows a schematic overview of the robotic lawn mower 100.

The robotic lawn mower 100 comprises a body 140 and is adapted for a forward travelling direction F and a reverse travelling direction R.

The robotic lawn mower 100 further comprises a control unit 110, at least one pair of drive wheels 131A, 131B, at least one swivelable wheel 130A, 130B, and at least one rotatable grass cutting disc 160, having a disc rotation axle 165. In a first example, the robotic lawn mower 100 comprises two swivelable wheels 130A, 130B. The wheels 130A, 130B; 131A, 131B are adapted to contact ground G during normal operation, where the term normal operation relates to normal operation of the robotic lawn mower 100. The drive wheels 131A, 131B are front wheels that are positioned to face the forward travelling direction F such that the robotic lawn mower 100 is front-wheel driven.

According to some aspects, the rotatable cutting disc 160 is driven by a cutter motor 161, and the drive wheels 131A, 131B are drivably connected to an electric drive wheel motor 150.

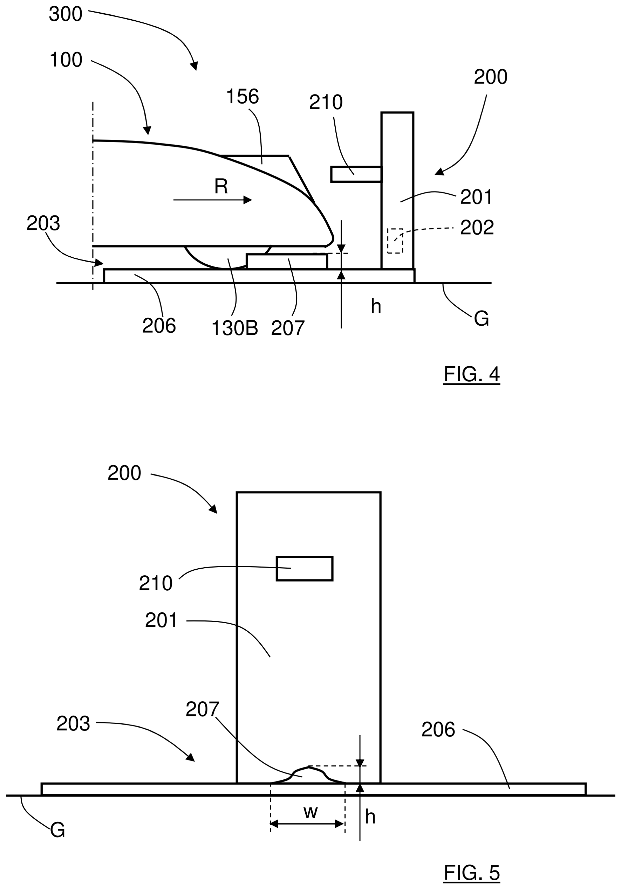

According to some further aspects, the robotic lawn mower 100 further comprises a rechargeable electric power source 155, such as a battery 155, adapted to provide power to the electric motors 150, 16,1 and a charging reception arrangement 156, for example in the form of charging skids. The charging reception arrangement 156 is adapted to be electrically connected to a charging transmission arrangement at a charging station, generally constituted by a robotic lawn mower interaction station 200 as for example illustrated in Figure 4-6.

According to some aspects, the robotic lawn mower 100 comprises a camera arrangement 170 facing the forward travelling direction F, where the control unit 110 is adapted to control the robotic lawn mower 100 to approach a robotic lawn mower interaction station 200 by means of input received from the camera arrangement 170.

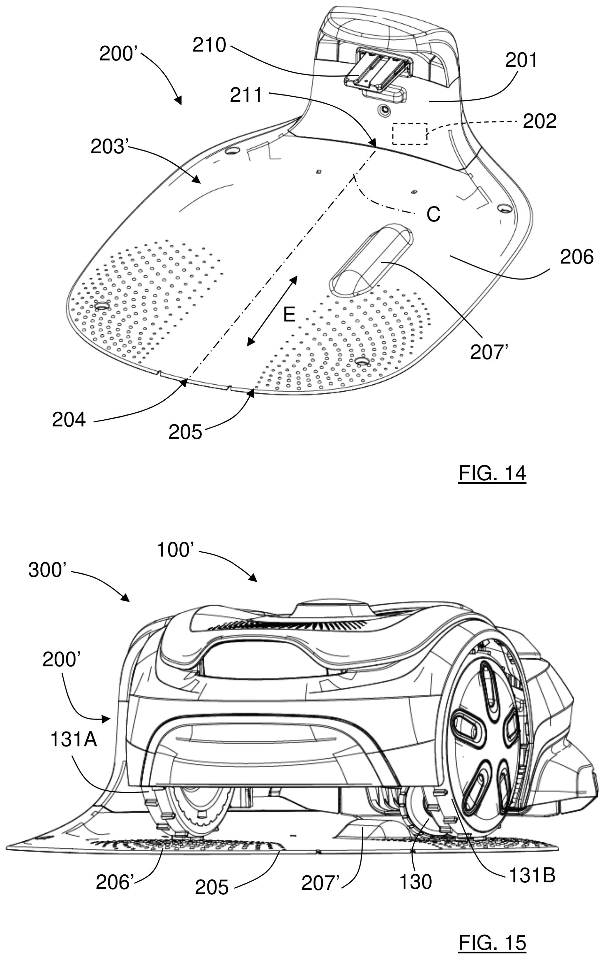

With continued reference to in particular Figure 4-6 and also to Figure 14, the present disclosure relates to a robotic lawn mower interaction station 200, 200' adapted to receive an oncoming robotic lawn mower 100, 100', such as for example the robotic lawn mower as described above. The interaction station 200, 200' comprises a charging tower 201 with a charging transmission arrangement 210 that is adapted to provide a charge current, delivered from a station charging unit 202, to a charging reception arrangement 156 of a docked robotic lawn mower 100, 100'. The interaction station 200, 200' comprises a reception ground plate 203, 203' that extends from the charging tower 201 towards a frontmost part 204, comprised in an entering edge 205, wherein the ground plate 203, 203' is constituted by a plate part 206, 206' and one ridge part 207, 207' that extends a certain ridge height h from the plate part 206, 206'.

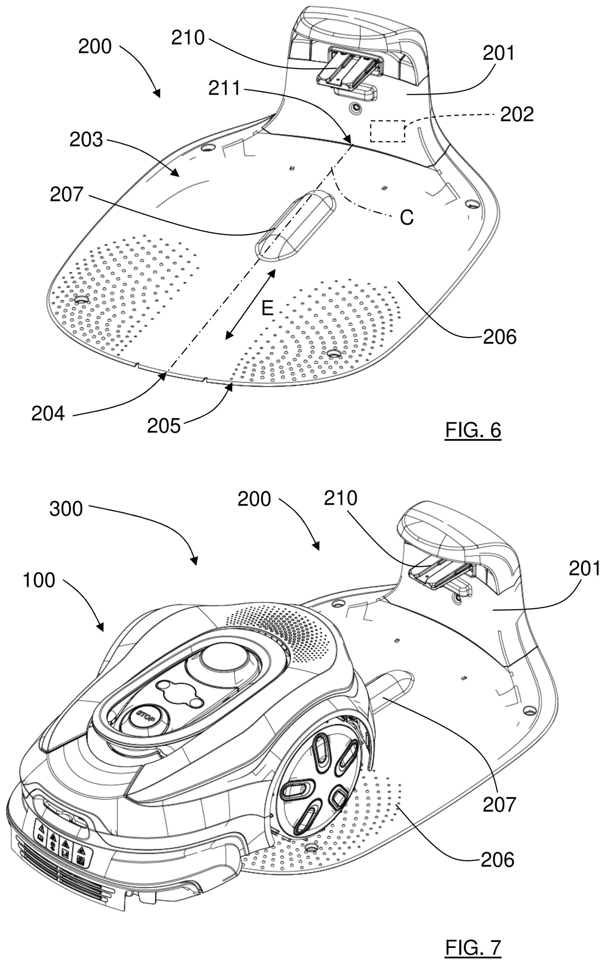

In this manner, the interaction station 200, 200' comprises a ridge part 207, 207' that can be used for detecting the position of a robotic lawn mower 100 relative to the interaction station when a wheel of the robotic lawn mower 100 passes over the ridge part. It is to be noted that the entering edge 205 may be straight or arcuate as shown in Figure 6 and Figure 14. In the latter case, the entering edge 205 does not have a defined length, but gradually passes into side edges.

The reception ground plate 203, 203' thus comprises the plate part 206, 206' and the ridge part 207, 207'.

According to some aspects, the reception ground plate 203, 203' extends along a longitudinal extension E from the charging tower 201 towards the frontmost part 204, where the ridge part 207, 207' at least partly runs along the longitudinal extension E. Preferably, the ridge part 207, 207' mainly runs along the longitudinal extension E.

This means that the ridge has an extension that at least partly, or mainly, runs along the longitudinal extension E, which alleviates the procedure of a wheel of the robotic lawn mower 100 passing over the ridge part.

In the illustrated examples, the ridge part 207, 207' runs along or parallel the longitudinal extension E, but the ridge may run more or less angled to the longitudinal extension E, but always at least partly or mainly along or parallel the longitudinal extension E.

According to some aspects, the entering edge 205 is adapted to receive an oncoming and docking robotic lawn mower 100, 100', and the longitudinal extension E extends along a travelling direction F, R of a robotic lawn mower 100, 100' when being received at the interaction station 200, 200'. The travelling direction F, R of a robotic lawn mower 100, 100' at a certain time can either be the forward F travelling direction or the reverse R travelling direction of the robotic lawn mower 100, 100'.

According to some aspects, the ridge part 207, 207' has a ridge width w mainly across the longitudinal extension E, where the ridge height h increases towards, and decreases from, a maximum ridge height h along the ridge width w. This alleviates the procedure of a wheel of the robotic lawn mower 100 passing over the ridge part, the shape of the ridge part providing a smooth passage.

According to some aspects, the reception ground plate 203 has a center line C that extends straight from a charging tower base center 211, along the longitudinal extension E, towards the frontmost part 204, where the ridge part 207 extends along the center line C.

This is illustrated in Figure 6-13 where the centered ridge part 207 is suitable for detecting a desired position of a four-wheeled robotic lawn mower 100 relative to the interaction station 200 when one swivelable wheel 130A out of two swivelable rear wheels 130A, 130B of the robotic lawn mower 100 passes over the ridge part 207. This corresponds to the first example.

According to some aspects, the reception ground plate 203' has a center line C that extends straight from a charging tower base center 211 along the longitudinal extension E, towards the frontmost part 204, where the ridge part 207' extends offset from the center line C.

This is illustrated in Figure 14-17 where the off-set ridge part 207' is suitable for detecting a desired position of a three-wheeled robotic lawn mower 100' relative to the interaction station 200' when the only swivelable rear wheel 130 of the robotic lawn mower 100' passes over the ridge part 207'. This corresponds to a second example.

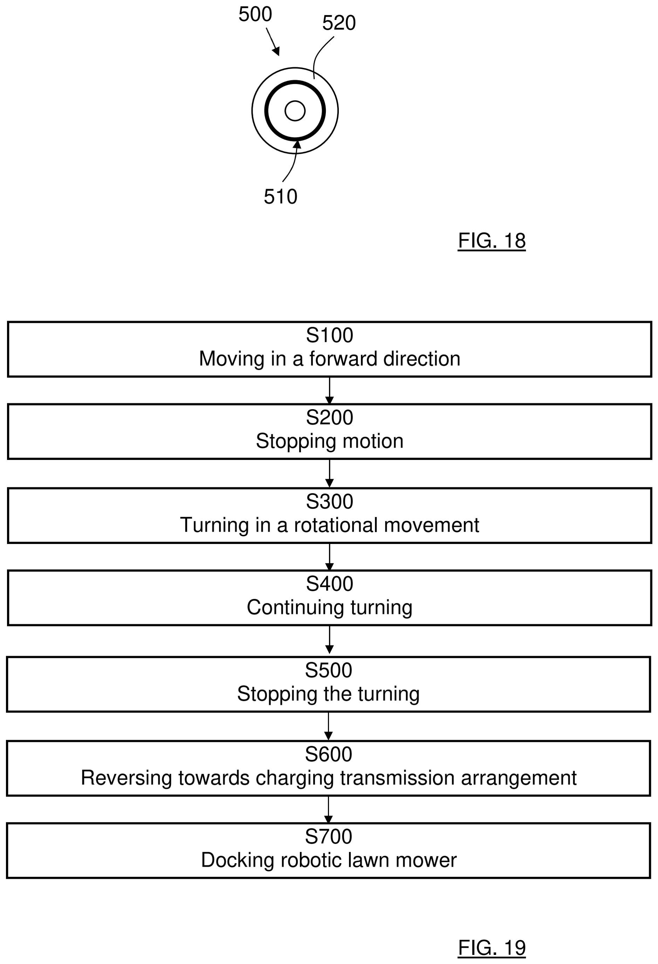

With reference also to Figure 19, the present disclosure also relates to a computer-implemented method performed by a robotic lawn mower control unit 110, such as for example the control unit 110 mentioned above. The method comprises controlling a front-wheel driven robotic lawnmower 100, 100', such as for example the robotic lawnmower 100, 100' described above, to move S100 in a forward direction F and approach a robotic lawn mower interaction station 200, 200' having a charging transmission arrangement 210, such as for example the interaction station 200, 200' mentioned above, and to stop S200 at a distance from the charging transmission arrangement 210 as illustrated in Figure 7.

The method further comprises controlling the robotic lawnmower 100 to turn S300 in a rotational movement such that at least one rear wheel enter a reception ground plate 203 of the interaction station 200, to continue turning S400 such that at least one rear wheel 130A passes a ridge part 207 formed in the reception ground plate 203, and to detect S500 that at least one rear wheel 130A, 130 has passed the ridge part 207 formed in the reception ground plate 203. When this is detected, the method further comprises controlling the robotic lawnmower 100 to stop S600 the turning, to reverse S700 towards the charging transmission arrangement 210, and to dock S800 the robotic lawn mower 100 such that electrical contact is established between the charging transmission arrangement 210 and a charging reception arrangement 156 of the docked robotic lawn mower 100.

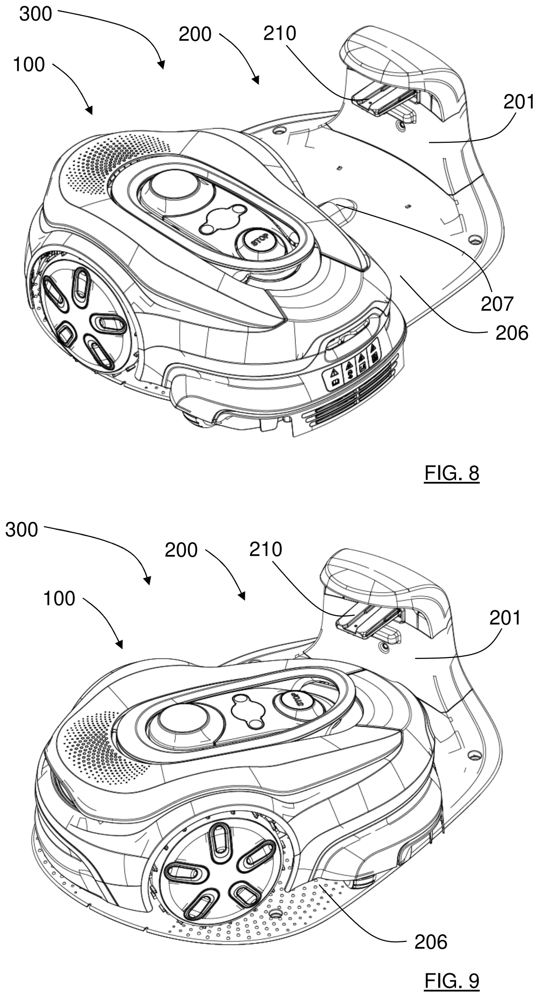

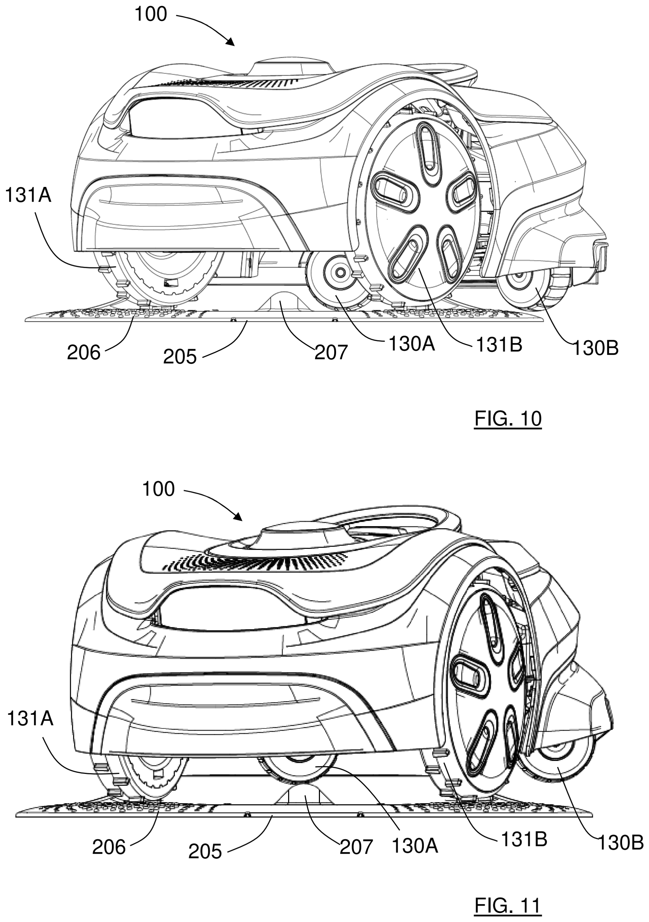

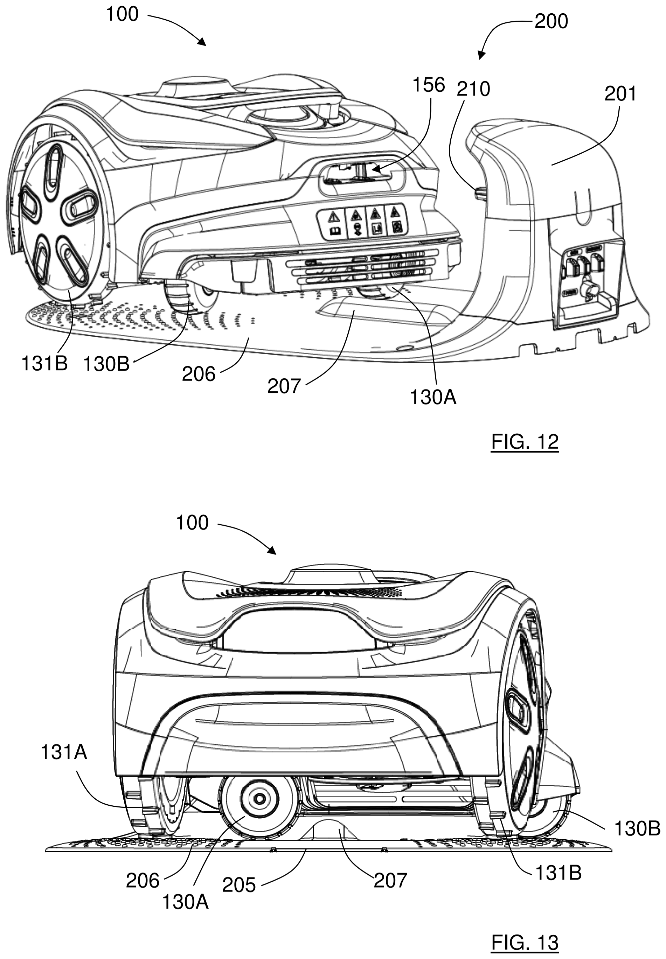

The above is illustrated in Figure 8-13 for a first example with a four-wheeled robotic lawn mower 100. In Figure 8 and Figure 9 it is illustrated how the robotic lawnmower 100 turns in a rotational movement such that at least one swivelable rear wheel enters the reception ground plate 203, and in Figure 10 it is illustrated how a left swivelable rear wheel 130A is about to reach the ridge part 207. In Figure 11 and Figure 12 it is illustrated how the left rear wheel 130A has climbed to the top of the ridge part 207, and in Figure 13 it is illustrated that the left rear wheel 130A just has descended from the ridge part 207.

When this is detected, the robotic lawnmower 100 reverses towards the charging transmission arrangement 210 as illustrated in Figure 4, and docks such that electrical contact is established between the charging transmission arrangement 210 and a charging reception arrangement 156 of the docked robotic lawn mower 100. In other words, when it is detected that the left rear wheel 130A just has descended from the ridge part 207, it means that the robotic lawnmower 100 is in a suitable position for reversing into a docked position where charging is enabled, preferably without any further positioning being needed. As illustrated in for example Figure 2 and Figure 12, and according to some aspects, the charging reception arrangement 156 has a funnel-shape that provides a mechanical auto-correction for moderate alignment errors.

As illustrated, and discussed previously for the interaction station 200, the ridge part 207 is centered and suitable for detecting a desired position of the four-wheeled robotic lawn mower 100 relative to the interaction station 200 when one swivelable wheel 130A out of two swivelable rear wheels 130A, 130B of the robotic lawn mower 100 passes over the ridge part 207. The desired position corresponds to that the robotic lawnmower 100 is in a suitable position for reversing into a docked position where charging is enabled without any further positioning being needed. It is to be noted that in some embodiments, a slight further positioning can be needed, for example a predetermined position adjustment.

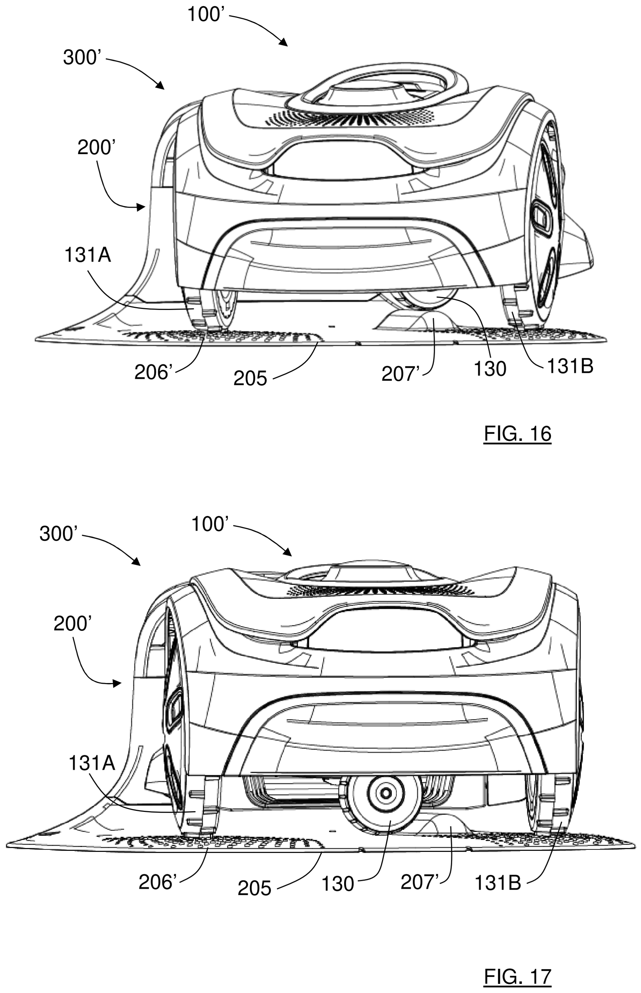

A corresponding sequence is illustrated in Figure 16-18 for a second example with a three-wheeled robotic lawn mower 100'. In Figure 16 it is illustrated how the swivelable rear wheel 130 is about to reach the ridge part 207', in Figure 17 it is illustrated how the rear wheel 130 has climbed to the top of the ridge part 207', and in Figure 18 it is illustrated that the rear wheel 130 just has descended from the ridge part 207'.

When this is detected, the robotic lawnmower 100' reverses towards the charging transmission arrangement 210 as described above for the four-wheeled robotic lawn mower 100 and as illustrated in Figure 4. As illustrated, and discussed previously for the interaction station 200, the ridge part 207' is offset and suitable for detecting a desired position of the three-wheeled robotic lawn mower 100' relative to the interaction station 200' when the swivelable wheel 130 of the robotic lawn mower 100' passes over the ridge part 207'. The offset is thus designed to fit the three-wheeled robotic lawn mower 100'. The desired position corresponds to that the robotic lawnmower 100' is in a suitable position for reversing into a docked position where charging is enabled without any further positioning being needed. It is to be noted that in some embodiments, a slight further positioning can be needed, for example a predetermined position adjustment.

It should be noted that depending on the configuration of the rear wheels 130A, 130B, the ridge may extend offset from the center line C for a four-wheeled robotic lawn mower 100 as well. This may for example dispense with the need for a slight further positioning as mentioned above.

Other wheel configurations are conceivable with corresponding positioning of one or more ridges.

According to some aspects, the method further comprises using a detector device 171 to detect that that at least one rear wheel 130A, 130 has passed a ridge part 207, 207' formed in a reception ground plate 203, 203' of a robotic lawn mower interaction station 200, 200'. The detector device 171 is used for measuring at least one of an acceleration velocity, and angular velocity, and orientation.

The present disclosure also relates to a control unit 110 adapted to execute the methods described herein.

As indicated in Figure 1, according to some aspects, the control unit 110 may be adapted to be in contact, suitably by means of wireless communication 241, with external units, for example a communication system 240. This may, e.g., be a third generation partnership program (3GPP) defined access network like the fourth generation (4G) or the fifth generation (5G) access networks or a satellite system such as GPS. The access network may provide access to remote networks and other resources such as, e.g., the Internet. According to some aspects, the remote server can be a part of a cloud service 263 and be adapted to communicate 262 via a communications system 261.

It is also appreciated that some processing functions may be performed by resources in a remote network 242, such as a remote server 243, where the remote network 242 can be a cloud service.

The control unit 110 may be constituted by one or more control unit parts that can be separate from each other. Some or all control unit parts may be comprised in a control unit arrangement 110 and/or a remote server 243.

In Figure 3 it is schematically illustrated, in terms of a number of functional units, the components of the control unit 110 according to embodiments of the discussions herein. Processing circuitry 115 is provided using any combination of one or more of a suitable central processing unit CPU, multiprocessor, microcontroller, digital signal processor DSP, etc., capable of executing software instructions stored in a computer program product, e.g. in the form of a storage medium 120. The processing circuitry 115 may further be provided as at least one application specific integrated circuit ASIC, or field programmable gate array FPGA. The processing circuitry thus comprises a plurality of digital logic components.

Particularly, the processing circuitry 115 is configured to cause the control unit 110 to perform a set of operations, or steps to control the operation of the robotic lawn mower 100 including, but not being limited to, controlling the camera arrangement 170, processing images received via the camera arrangement 170, and the propulsion of the robotic lawn mower 100. For example, the storage medium 120 may store the set of operations, and the processing circuitry 115 may be configured to retrieve the set of operations from the storage medium 120 to cause the control unit 110 to perform the set of operations. The set of operations may be provided as a set of executable instructions. Thus, the processing circuitry 115 is thereby arranged to execute at least parts of the methods as herein disclosed.

The storage medium 120 may also comprise persistent storage, which, for example, can be any single one or combination of magnetic memory, optical memory, solid state memory or even remotely mounted memory.

According to some aspects, the control unit 110 further comprises an interface 125 for communications with at least one external device such as a user terminal, the remote server 243 and/or a charging station. As such, the interface 125 may comprise one or more transmitters and receivers, comprising analogue and digital components and a suitable number of ports for wireline communication. The interface 125 can be adapted for communication with other devices, such as the remote server 243, a charging station, and/or other robotic lawn mowers. Examples of such wireless communication devices are Bluetooth^{®}, WiFi^{®} (IEEE802.11b), Global System Mobile (GSM) and LTE (Long Term Evolution), to name a few. This means that, according to some aspects, other units such as the remote server 243 are adapted to partly execute the methods as herein disclosed.

The present disclosure also relates to the robotic lawn mower 100, 100' as described previously, where the control unit 110 is the above control unit 110 that is adapted to execute the methods described herein.

According to some aspects, and as shown in Fire 2 and Figure 3, the robotic lawn mower 100, 100' further comprises a camera arrangement 170 facing the forward travelling direction F, where the control unit 110 is adapted to control the robotic lawn mower 100, 100' to approach a robotic lawn mower interaction station 200, 200' by means of input received from the camera arrangement 170.

This means that the robotic lawn mower 100, 100' can have a forward-looking camera as main environmental detections sensor, which is efficient both during manufacture and during operation, and reduces manufacturing cost.

According to some aspects, as for example shown in Figure 1-3, the robotic lawn mower 100 has one pair of drive wheels 131A, 131B, and two swivelable wheels 130A, 130B which corresponds to the first example. In the second example, as for example shown in Figure 15-17, the robotic lawn mower 100' has one pair of drive wheels 131A, 131B, and only one swivelable wheel 130.

According to some aspects, the robotic lawn mower 100 further comprises a detector device 171 that is adapted to detect that that at least one rear wheel 130A, 130 has passed a ridge part 207, 207' formed in a reception ground plate 203, 203' of a robotic lawn mower interaction station 200, 200'.

According to some aspects, the detector device 171 is adapted to measure at least one of an acceleration velocity, an angular velocity, and an orientation.

An example of such a detector device 171 may for example be an Inertia Measurement Unit (IMU) sensor.

This provides a reliable detection of that a rear wheel 130A, 130 has passed the ridge part 207, 207'. Ordinary inexpensive sensors, already being present at the robotic lawnmower, can be used, neither adding cost, nor complexity.

The present disclosure also relates to a robotic lawn mower system 300, 300' comprising the robotic lawn mower 100, 100' as described herein, and the robotic lawn mower interaction station 200, 200' as described herein.

With reference to Figure 18, the present disclosure also relates to a computer program product 500 comprising computer executable instructions 510 stored on media 520 to execute the methods described herein.

The present disclosure is not limited to the examples described herein, but may vary freely within the scope of the appended claims. For example, the environmental detection system has been described to consist of at least one camera arrangement 170, but other types of sensor devices may according to some aspects also be comprised in the environmental detection system. Such sensor devices may for example include at least one of radar sensors, Lidar sensors and ultrasonic sensors.

## Claims

1. A computer-implemented method performed by a robotic lawn mower control unit (110), where the method comprises controlling a front-wheel driven robotic lawnmower (100, 100') to
move (S100) in a forward direction (F) and approach a robotic lawn mower interaction station (200, 200') having a charging transmission arrangement (210),
stop (S200) at a distance from the charging transmission arrangement (210);
turn (S300) in a rotational movement such that at least one rear wheel enter a reception ground plate (203, 203') of the interaction station (200, 200');
continue turning (S400) such that at least one rear wheel (130A, 130) passes a ridge part (207, 207') formed in the reception ground plate (203, 203');
detect (S500) that at least one rear wheel (130A, 130) has passed the ridge part (207, 207') formed in the reception ground plate (203, 203'); and then to stop (S600) the turning;
the method further comprising controlling the robotic lawnmower (100, 100') to
reverse (S700) towards the charging transmission arrangement (210); and to
dock (S800) the robotic lawn mower (100, 100') such that electrical contact is established between the charging transmission arrangement (210) and a charging reception arrangement (156) of the docked robotic lawn mower (100, 100').

2. The method according to claim 1, further comprising using a detector device (171) to detect that that at least one rear wheel (130A, 130) has passed a ridge part (207, 207') formed in a reception ground plate (203, 203') of a robotic lawn mower interaction station (200, 200'), where the detector device (171) is used for measuring at least one of
- an acceleration velocity;
- angular velocity; and
- orientation.

3. A control unit (110) adapted to execute the methods according to any one of the claims 1 or 2.

4. A robotic lawn mower (100, 100') comprising a body (140), at least one rotatable grass cutting disc (160) having a disc rotation axle (165), at least one pair of drive wheels (131A, 131B), and at least one swivelable wheel (130A, 130B; 130), the robotic lawn mower (100, 100') being adapted for a forward traveling direction (F) and a reverse travelling direction (R) where the drive wheels (131A, 131B) are front wheels that are positioned to face the forward travelling direction (F) such that the robotic lawn mower (100) is front-wheel driven, where the robotic lawn mower (100, 100') further comprises the control unit (110) according to claim 3.

5. The robotic lawn mower (100, 100') according to claim 4, further comprising a camera arrangement (170) facing the forward travelling direction (F), where the control unit (110) is adapted to control the robotic lawn mower (100, 100') to approach a robotic lawn mower interaction station (200, 200') by means of input received from the camera arrangement (170).

6. The robotic lawn mower (100) according to any one of the claims 4 or 5, where the robotic lawn mower (100) has one pair of drive wheels (131A, 131B), and two swivelable wheels (130A, 130B).

7. The robotic lawn mower (100) according to any one of the claims 4-6, further comprising a detector device (171) that is adapted to detect that that at least one rear wheel (130A, 130) has passed a ridge part (207, 207') formed in a reception ground plate (203, 203') of a robotic lawn mower interaction station (200, 200').

8. The robotic lawn mower (100, 100') according to claim 7, wherein the detector device (171) is adapted to measure at least one of
- an acceleration velocity;
- angular velocity; and
- orientation.

9. A robotic lawn mower interaction station (200, 200') adapted to receive an oncoming robotic lawn mower (100, 100'), where the interaction station (200, 200') comprises a charging tower (201) with a charging transmission arrangement (210) that is adapted to provide a charge current, delivered from a station charging unit (202), to a charging reception arrangement (156) of a docked robotic lawn mower (100, 100'), where the interaction station (200, 200') comprises a reception ground plate (203, 203') that extends from the charging tower (201) towards a frontmost part (204), comprised in an entering edge (205), wherein the ground plate (203, 203') is constituted by a plate part (206, 206') and one ridge part (207, 207') that extends a certain ridge height (h) from the plate part (206, 206').

10. The interaction station (200, 200') according to claim 9, wherein the reception ground plate (203, 203') extends along a longitudinal extension (E) from the charging tower (201) towards the frontmost part (204), where the ridge part (207, 207') at least partly runs along the longitudinal extension (E).

11. The interaction station (200, 200') according to claim 10, wherein the entering edge (205) is adapted to receive an oncoming and docking robotic lawn mower (100, 100'), and where the longitudinal extension (E) extends along a travelling direction (F, R) of a robotic lawn mower (100, 100') when being received at the interaction station (200, 200').

12. The interaction station (200, 200') according to any one of the claims 10 or 11, wherein the ridge part (207, 207') has a ridge width (w) mainly across the longitudinal extension (E), where the ridge height (h) increases towards, and decreases from, a maximum ridge height (h) along the ridge width (w).

13. The interaction station (200) according to any one of the claims 9-12, wherein the reception ground plate (203) has a center line (C) that extends straight from a charging tower base center (211), along the longitudinal extension (E), towards the frontmost part (204), where the ridge part (207) extends along the center line (C).

14. The interaction station (200') according to any one of the claims 9-12, wherein the reception ground plate (203') has a center line (C) that extends straight from a charging tower base center (211) along the longitudinal extension (E), towards the frontmost part (204), where the ridge part (207') extends offset from the center line (C).

15. A robotic lawn mower system (300, 300') comprising the robotic lawn mower (100, 100') according to any one of the claims 4-8 and the robotic lawn mower interaction station (200, 200') according to any one of the claims 9-14.

16. A computer program product (500) comprising computer executable instructions (510) stored on media (520) to execute the methods according to any one of the claims 1 or 2.
